# EUROPEAN PATENT SPECIFICATION

(11) **EP 2 382 381 B1**
(45) Date of publication and mention of the grant of the patent: **04.01.2017**
(21) Application number: 10733996.2
(22) Date of filing: 26.01.2010
(51) Int. Cl.: F01N 13/18, F01N 13/08, F01N 3/28, F01N 3/10, F01N 13/00, F01N 3/20, F01N 3/021, F01N 3/023, B01D 53/94, F01N 3/08, F01N 3/025

(54) **EXHAUST GAS AFTERTREATMENT ASSEMBLY**
ANLAGE ZUR ABGASNACHBEHANDLUNG
ENSEMBLE DE POST-TRAITEMENT DE GAZ D'ÉCHAPPEMENT

(30) Priority: 26.01.2009 US 320425
(43) Date of publication of application: 02.11.2011
(73) Proprietor: Caterpillar, Inc., Peoria, IL 61629-9510 (US)
(72) Inventor: HARRISON, Benjamin, Peoria, Illinois 61629-9510 (US); NIAZ, Naseer, A., Peoria, Illinois 61629-9510 (US); MEDD, Barry, Peoria, Illinois 61629-9510 (US); MERCHANT, Jack, A., Peoria, Illinois 61629-9510 (US); SIMPSON, Scott, A., Peoria, Illinois 61629-9510 (US); MORAN, Matthew, D., Peoria, Illinois 61629-9510 (US); WELLER, Brian, R., Peoria, Illinois 61629-9510 (US); OLSEN, Paul, F., Peoria, Illinois 61629-9510 (US); ROOZENBOOM, Stephan, D., Peoria, Illinois 61629-9510 (US)
(74) Representative: BRP Renaud & Partner mbB Rechtsanwälte Patentanwälte Steuerberater
(86) International application number: PCT/US2010/022070
(87) International publication number: WO 2010/085789

(56) References cited:
- WO-A1-2006/003713
- DE-U1-202007 010 435
- JP-A- 3 281 433
- JP-A- 59 068 515
- US-A1- 2003 226 412
- US-A1- 2008 121 451

## Description

### Technical Field

The present disclosure relates generally to a combustion exhaust gas after treatment assembly and, more particularly, to a combustion exhaust gas after treatment assembly including a mount.

### Background

Engines, such as internal combustion engines, exhaust a complex mixture of air pollutants and condensate. In order to comply with environmental and legal requirements and sometimes in order to improve performance of the engine a combustion exhaust gas after treatment assembly may be provided, connected to exhaust ports of the engine, for treating the exhaust gasses.

Due to increased attention for the environment exhaust emission standards have become and still are becoming more stringent. Moreover, due to increase of fuel costs engine performance and economics have become more important. In order to comply with these requirements engine manufacturers have developed combustion exhaust after treatment assembly which are tailored to specific engines, depending on e.g. engine type, size, class and intended use of the engines, fuel types and engine loads. This has led to a large variety of types of combustion exhaust after treatment components, as well as sizes, shapes and dimensions, which may lead to an increase of costs in e.g. manufacturing and stock. Moreover exhaust treatment assemblies may be large and normally have to be assembled from many different components, placed in different positions of a vehicle or work tool, separated by connecting pipes and hoses.

US 2006/0156712 (the '712 application) discloses an exhaust gas treatment system, including a first basic housing and an add-on housing that may be detachably mounted on the basic housing. The basic housing is provided with an exhaust gas inlet pipe and an exhaust gas outlet pipe. At least one SCR (Selective Catalytic Reductor) and at least one oxidizing catalytic converter are provided within the basic housing. The add-on housing includes at least one particle separation device and at least one reducing agent feed mechanism. The basic housing and the add-on housing are connected to each other by connecting pipes 21. The '712 application does not specifically disclose or discuss any means for mounting the system in a vehicle.

Although this known system may provide for the possibility of replacing one add-on housing for another, the add-on housings performing different functions, this system still does not provide optimal flexibility in design of an exhaust gas after treatment assembly or of adjusting such assembly for different purposes. Moreover, this known system is relatively difficult to assemble and disassemble, for example for revision or maintenance purposes. Furthermore this known system is relatively large.

DE 20 2007 010 435 U1 discloses an exhaust gas system for motor vehicles with internal combustion engines. The exhaust gas system includes a diesel oxidation catalyst within a first separable housing, and a particle filter or SCR catalyst within a second separable housing. The separable housings include an inlet hood, an outlet hood, and a housing shell releasably connected to each other via clamps.

The disclosed embodiments in this description are directed to addressing at least one of the issues as set out above or to providing an alternative system or method for exhaust gas after treatment.

### Summary

In one aspect the present disclosure is directed to a combustion engine exhaust after treatment system mount. The mount may include a body with a first mounting position, a second mounting position and a foot for mounting the body to an engine or wall. The first mounting position may have a first mounting surface and the second mounting position may have a second mounting surface. The first mounting position may have a first longitudinal axis and the second mounting position may have a second longitudinal axis, wherein the first longitudinal axis may be positioned substantially parallel to the second longitudinal axis. Each of the first and second mounting surfaces may have opposite ends. Near each of those ends a connector may be provided for mounting an exhaust gas after treatment system component in the respective mounting position.

In another aspect the present disclosure is directed to a combustion engine exhaust after treatment system, including a mount and at least two exhaust gas after treatment components chosen from the group including a particle filter (PF), a muffler, a heat source for PF regeneration, a Selective Catalytic Reductor (SCR), a diesel oxidation catalyst (DOC), a lean NOx trap (LNT) and a mixing chamber. The mount may include: a first mounting position, a second mounting position and a foot for mounting the body. At least one of the components may be positioned in the first mounting position and the at least one other component may be positioned in the second mounting position, fluidly connected to the first component.

In a further aspect the present disclosure is directed to a combustion engine exhaust after treatment assembly, including a particle filter (PF), and at least two of a muffler, a heat source for PF regeneration, a Selective Catalytic Reductor (SCR), a diesel oxidation catalyst (DOC), a lean NOx trap (LNT) and a mixing chamber, and including a mount. The mount may include a body having a first mounting and second mounting position and a foot for mounting the body to an engine or wall. The PF may be designed to be mounted in the first mounting position, whereas the at least two of the muffler, heat source for PF regeneration, SCR, diesel oxidation catalyst (DOC), lean NOx trap (LNT) and mixing chamber may be designed to be individually mounted in the second mounting position, connected to the PF, and may be interchangeable.

In a still further aspect the present disclosure may be directed to a combustion engine, including or connected to a combustion engine exhaust after treatment system. The exhaust after treatment system may include a mount. A PF may be mounted in a first mounting position of the mount, whereas one of a muffler, a heat source for PF regeneration, a Selective Catalytic Reductor (SCR), a diesel oxidation catalyst (DOC), a lean NOx trap (LNT) and a mixing chamber may be mounted in a second mounting position of the mount, adjacent to and in fluid communication with the PF.

In another aspect the present disclosure may be directed to a method for designing a combustion engine exhaust after treatment system. The method may include designing a particulate filter (PF) and a mount for the exhaust after treatment system, wherein the mount may include a body having a first and a second mounting position. The particulate filter may be designed such that it may be mounted in the first mounting position. At least one of a muffler, a heat source for PF regeneration, an SCR, a diesel oxidation catalyst (DOC), a lean NOx trap (LNT) and a mixing chamber may be designed to be mounted in the second mounting position. At least one of the first and second mounting position and at least one of the particulate filter and the one of the muffler, the heat source for PF regeneration, the SCR, the diesel oxidation catalyst (DOC), the lean NOx trap (LNT) and the mixing chamber may be designed such that they may be placed in the respective first or second mounting position in angularly rotated positions. The method may include mounting a connector to at least one of a first or second mounting surfaces, wherein the connector is configured to secure the particulate filter or the at least one muffler, heat source for PF regeneration, SCR, diesel oxidation catalyst (DOC), lean NOx trap (LNT), or mixing chamber to the at least one of the first or second mounting surface.

### Brief Description of the Drawings

Fig. 1 shows in an exploded perspective view an embodiment of an engine exhaust after treatment assembly;
Fig. 2 shows in perspective view an engine exhaust after treatment assembly in assembled position;
Fig. 3 shows in a side elevation view an embodiment of a mount for an engine exhaust after treatment assembly;
Fig. 4 shows a perspective view of an alternative embodiment of a mount for an engine exhaust after treatment assembly;
Fig. 5 shows in bottom and side view an assembly of Fig. 2
Fig. 6 shows a perspective view of a further alternative embodiment of a mount for an engine exhaust after treatment assembly;
Fig. 7 shows in perspective view an engine exhaust after treatment assembly, mounted on a mount of fig. 6;
Fig. 8 shows in perspective view an engine exhaust after treatment assembly, mounted with a mount on a combustion engine;
Fig. 9-11 show an embodiment of a mount in respectively perspective view, side elevation view and in side elevation view with the exhaust gas treatment components mounted thereon;
Fig. 12-14 show an alternative embodiment of a mount in respectively perspective view, side elevation view and in side elevation view with the exhaust gas treatment components mounted thereon;
Fig. 15-17 show yet another alternative embodiment of a mount in respectively perspective view, side elevation view and in side elevation view with the exhaust gas treatment components mounted thereon;
Fig. 18-20 show yet another alternative embodiment of a mount in respectively perspective view, side elevation view and in side elevation view with the exhaust gas treatment components mounted thereon; and
Fig. 21-23 show yet another alternative embodiment of a mount in respectively perspective view, side elevation view and in side elevation view with the exhaust gas treatment components mounted thereon.

### Detailed Description

In the description the same or similar elements and features have the same or corresponding reference signs. The embodiments shown and discussed are only disclosed by way of example and should not be construed as limiting the disclosure. The disclosure will be elucidated in relation to an internal combustion engine, in particular but not limited to a diesel engine. It should be understood that an assembly according to the disclosure could also be used with other types of engines, such as but not limited to gasoline, natural gas, bio fuel or liquefied gas engines. Throughout the description different parts of an engine exhaust after treatment system may be referred to by abbreviations, wherein SCR will be used for Selective Catalytic Reductor or Reduction or catalyst, PF will be used for Particle Filter or Filtering, DPF for Diesel Particle Filter or Filtering, LNT for Lean NOx Trap and DOC for Diesel oxidation Catalyst. Throughout the description reference will be made to an exhaust after treatment system, which may also be referred to as an after treatment assembly.

For combustion engines, for example internal combustion engines such as but not limited to diesel engines an exhaust system is generally provided for expelling exhaust gasses to the environment. It is common practice to provide at least an exhaust gas after treatment system or assembly between the engine exhaust ports of the engine block and the end of the exhaust pipe such as the tail pipe. The exhaust gas after treatment system may be used for e.g. environmental reasons, for engine performance reasons and/or for fuel economical reasons and may be provided with different components, depending on for example engine size, fuel type, environmental requirements, fuel economical requirements, engine performance requirements and other engine or control requirements or requirements of e.g. a work tool, vehicle or appliance in or for which the engine is to be used. These components may e.g. be chosen from the group including mufflers, a heat sources for PF regeneration, catalysts and a mixing chambers and other exhaust gas treatment devices.

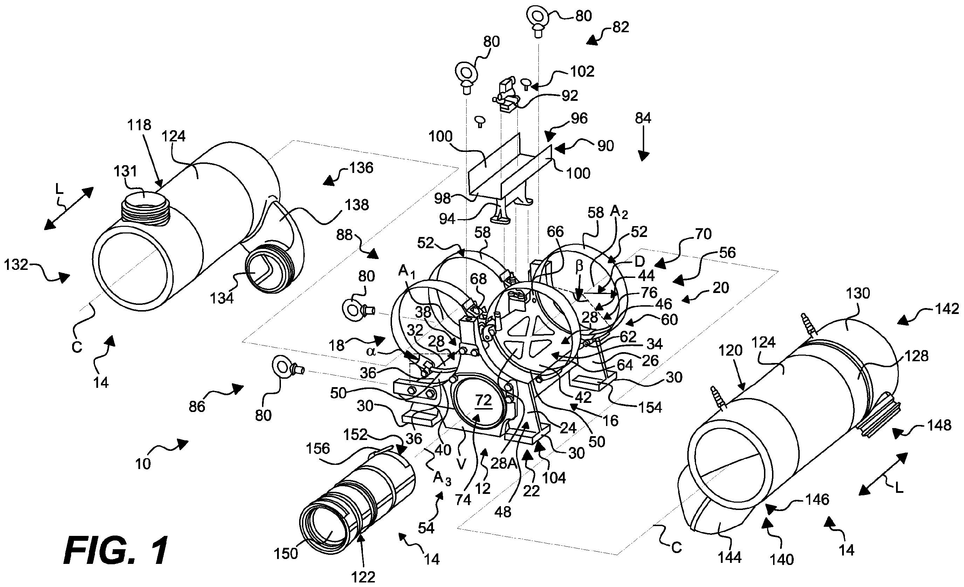

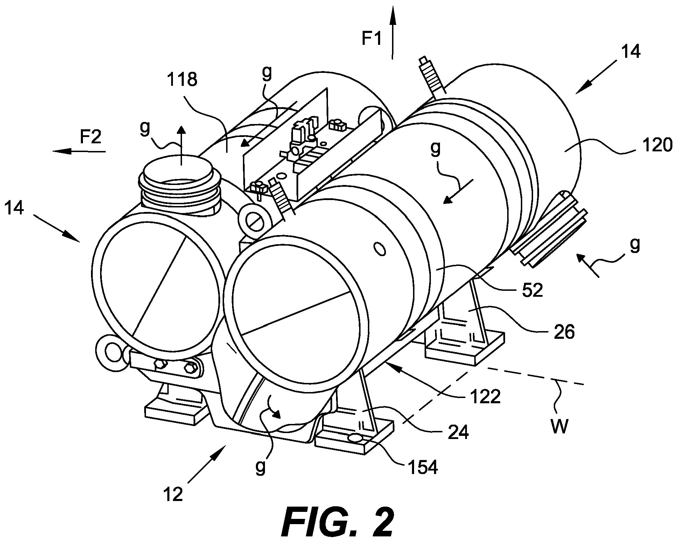

Fig. 1 shows in an exploded view an embodiment of an exhaust after treatment assembly 10 including a mount 12 and a number of exhaust gas treatment components, generally indicated by reference sign 14. In fig. 2 three such components 14 are shown, mounted on the mount 12. In an embodiment the mount 12 may have a body 16 with a first mounting position 18 and a second mounting position 20 and a foot 22. The first and second mounting positions 18, 20 may be in side by side relationship. The body 16 may include a first bracket 24 and a second bracket 26, spaced apart and connected by at least one cross member 28. In an embodiment there may be a number of cross members 28, for example three. The cross members 28 may be connected between the brackets 24, 26 by bolts, screws or another type of connector, such as to be releasably connected. In another embodiment the cross members 28 may be permanently connected to the brackets 24, 26, for example by welding, gluing or by integrally manufacturing them, in one piece. The foot 22 may include a number of foot elements 30. By way of example one hole 154 is shown in each foot element 30 in fig. 2. In an embodiment each of the brackets 24, 26 may be of one piece construction. The brackets 24, 26 may be cast brackets 24, 26. In another embodiment the brackets 24, 26 may be forged, milled and/or otherwise sculpted brackets. In a still further embodiment the brackets 24, 26 may be made of set plate material, such as steel plates, such that the brackets 24, 26 have a substantially hollow cross section, which cross section in different embodiments may be substantially U- shaped, W-shaped or V shaped or combinations thereof.

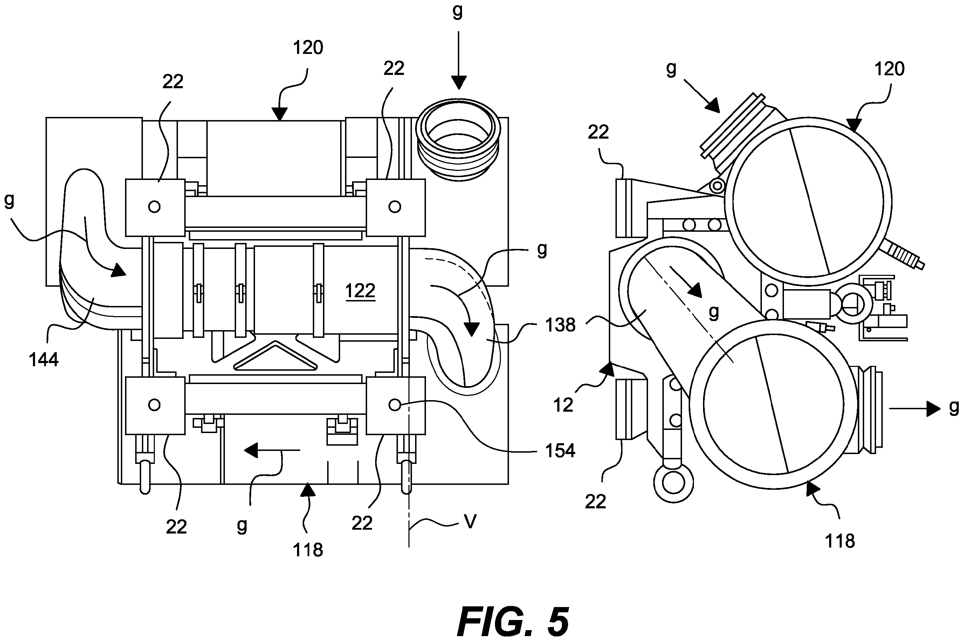

The first mounting position 18 may have a first mounting surface 32. The second mounting position 20 may have a second mounting surface 34. Each of the first mounting surface 32 and the second mounting surface 34 may be an actual surface or an at least partially virtual surface. In an embodiment the first mounting surface 32 may be at least partly defined by a first surface 36 of the body 16. The first surface 36 may in an embodiment be formed on each of two brackets 24, 26. In an embodiment the first mounting surface 32 may be curved, more in particularly defined as a hollow side 38 of an actual or virtual cylinder segment 40, which segment may include an angle α. In an embodiment the second mounting surface 34 may be at least partly defined by a second surface 42 of the body 16. The second surface 42 may in an embodiment be formed on each of two brackets 24, 26. In an embodiment the second mounting surface 34 may be curved, more in particularly defined as a hollow side 44 of an actual or virtual cylinder segment 46, which segment may include an angle β. In an embodiment the angles α and β may be smaller than β 180°. In an embodiment the angles α and β may be smaller than 135°. In an embodiment each of the first mounting position 18 and the second mounting position 20 have a longitudinal axis A₁, A₂. The axis A₁, A₂ may extend substantially parallel to each other. In an embodiment one or both of the axis A₁, A₂ may extend substantially perpendicular to a plane V (see Fig. 5) defined by an outer surface 48 of at least one of the brackets 24, 26. In an embodiment a said cross member 28 may be formed to be or define part of the mounting surface 32, 34. In another embodiment one or both of the mounting surfaces 32, 34 may be formed other than by a segment of a cylinder. Each of the surfaces 32, 34 may in an embodiment be angled or facetted. In an embodiment one or both of the mounting surfaces 32, 34 may be provided with at least one protrusion 50 and/or one groove extending along a segment of the surface 32, 34, in circumferential direction thereof. In an embodiment at least one of the first and second mounting surface 32, 34 may be provided with an open space 28A. The open space 28A may in an embodiment be an opening in the respective cross member 28.

The first mounting position 18 and the second mounting position 20 are in an embodiment of fig. 1 each provided with a number of connectors 52 for fixture of an exhaust gas after treatment system component 14, as will be discussed hereafter. In an embodiment at two opposite ends 54, 56 of the body 16 a connector 52 may be provided for each of the mounting positions 18, 20. In another embodiment each of the mounting positions 18, 20 may be provided with a different number of connectors, which number may in an embodiment for at least one of the mounting positions be one or more than two. In an embodiment a connector 52 may include a band or strip element 58, which is connected with one end 60 by a hinge 62 to an edge 64 of a mounting surface 32, 34. An opposite end 66 of the connector 52 may be provided with a fixing element 68, which may be fixed to the body 16, the respective connector 52 and mounting surface 32, 34 forming a closed ring structure 70 with an internal cross section D. In an embodiment the cross section D may be substantially circular. In an embodiment each of the connectors 52 is provided with their own hinge 62 and fixing element 68, for individual operation thereof. In another embodiment connectors 52 may have combined hinges 62 and/or combined fixing elements 68, for combined operation. In another embodiment a connector 52 may be a shape-retaining element. The connector 52 may in an embodiment be a cast or forged part. In another embodiment the connectors 52 may be provided with different hinge mounting elements 62A and/or fixing elements 68, such that the circumferential length of the connector 52 may be adjusted to fit a specific one of exhaust gas after treatment components, as will be discussed hereafter.

In an embodiment according to fig. 1 the body 16 may be provided with a third mounting position 72, for mounting a further exhaust gas after treatment component, as will be discussed hereafter. In an embodiment each of two brackets 24, 26 may be provided with an opening 74, 76, which openings 74, 76 may be aligned substantially on a third axis A₃, which third axis may be substantially parallel to the first and/or second axis A₁, A₂. The axes A₁, A₂, A₃ may be positioned relatively close together, such that the first, second and third mounting positions 18, 20, 72 are in close relationship. In an embodiment the third mounting position 72 may be positioned between the first and second mounting position 18, 20 and the foot 22.

The body 16 may be provided with lifting elements 80. In an embodiment the lifting elements 80 may be lifting eyes. In another embodiment the lifting elements 80 may be openings in the body 16. In a still further embodiment the lifting elements 80 may be lifting hooks. In an embodiment a first set 82 of lifting elements 80 may be provided at a first side 84 of the body opposite the foot 22. In another embodiment a second set 86 of lifting elements 80 may be provided on a second side 88 of the body 16, which second side 88 is positioned between the first side 84 and the foot 22. In another embodiment the body 16 may have a first set 82 of lifting elements 80 on the first side 84 and a second set 86 at the second side 88, such that the mount 12 may be lifted in two directions F₁, F₂. The directions F₁, F₂ may include a substantially perpendicular angle. The directions F₁, F₂ may include both a substantially perpendicular angle with at least one of the axis A₁, A₂, A₃.

The body 16 may be provided with a mounting bracket 90 for mounting sensors 92 for the exhaust gas after treatment assembly 10. The mounting bracket 90 may have a base 94 for mounting on the body 16 and a top 96 for mounting the sensors 92. The top may have a bottom wall 98 connected to the base 94 and side shields 100. Between the side shields 100 and the bottom wall 98 sensors 92 and other electronic components 102 may be mounted, shielded from heat radiated by exhaust gas after treatment system components 14 mounted on and/or in the mount 12.

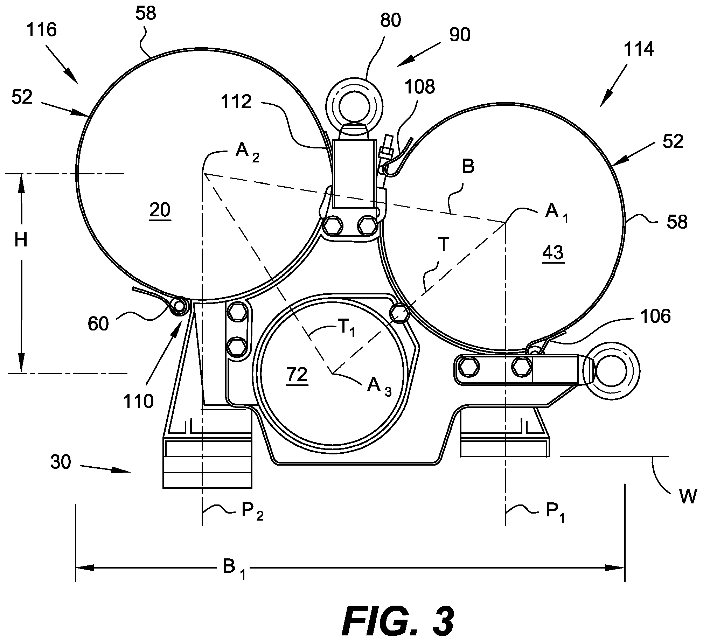

In an embodiment at least two of the foot elements 30 may have foot surfaces 104 which define a substantially flat plane W. In an embodiment the first, second or third axis A₁, A₂, A₃ may be positioned substantially parallel to the plane W. In another embodiment at least two of the first, second and third axis A₁, A₂, A₃ may be positioned substantially parallel to the plane W. In a still further embodiment the first, second and third axis A₁, A₂, A₃ may be positioned substantially parallel to the plane W. One of the first and second axis A₁, A₂ may be positioned further from the plane W than the other of the first and second axis A₁, A₂. The third axis A₃ may be positioned closer to the plane W than either of the first and second axis A₁, A₂. The first mounting position 18 may have a first edge 106 and a second edge 108 (see Fig. 3), at opposite sides of the surface 32. In an embodiment the first edge 106 may be closer to the plane W than the second edge 108. The second mounting position 20 may have a first edge 110 and a second edge 112, at opposite sides of the surface 34. In an embodiment the first edge 110 may be closer to the plane W than the second edge 112. The first edge 106 may be positioned at a side of a plane P₁ through the first axis A₁ perpendicular to the plane W, facing away from the second mounting position 20. The first edge 110 may be positioned at a side of a plane P₂ through the first axis A₂ perpendicular to the plane W, facing away from the first mounting position 18. The first mounting position 18 may have an open side 114 substantially facing away from the foot 22 and the second mounting position 20. The second mounting position 20 may have an open side 116 substantially facing away from the foot 22 and the first mounting position 18. The connectors 52 may be pivoted away from the respective mounting surfaces 32, 34 of the mounting positions 18, 20, opening the sides 114, 116.

As is shown in fig. 2 first exhaust gas after treatment system component 118 may be mounted in the first mounting position 18, a second exhaust gas after treatment system component 120 may be mounted in the second mounting position 20 and a third exhaust gas after treatment system component 122 may be mounted in the third mounting position 72. In an embodiment one of the first, second and third exhaust gas after treatment system component 118, 120, 122 may be chosen from the group including a particle filter PF, a muffler, a heat source for PF regeneration, a Selective Catalytic Reductor (SCR), a DOC, a LNT, and a mixing chamber and combinations of two or more of these components. In an embodiment in one of the first or second mounting position 18, 20 a PF may be mounted as a first exhaust gas after treatment system component 118, and in the other of the first and second mounting positions 18, 20 one of a muffler, a heat source for PF regeneration, an SCR and a mixing chamber may be mounted as a second exhaust gas after treatment system component 120. In an embodiment a mixing chamber may be mounted in the third mounting position 72, as a third exhaust gas after treatment system component 122. The mixing chamber may be in fluid connection with both the first and second exhaust gas after treatment system component 118, 120. In an embodiment the mixing chamber may connect a PF with a SCR. In the embodiment of Fig. 1, the third after treatment system component 122 is shown to be a mixing chamber having a additional inlet 156 for, for example, urea, another ammonia source, diesel, another hydrocarbon source, or another reductant. In another embodiment the first exhaust gas after treatment system component 118 may be a PF and the second exhaust gas after treatment system component 120 may be a muffler. The PF and the muffler may be connected by a connecting pipe as a third exhaust gas after treatment system component 122 in the third mounting position 72. In still another embodiment the third exhaust gas after treatment system component 122 may be a mixing chamber connecting a PF and a muffler.

In fig. 1 a SCR is shown as a first exhaust gas after treatment system component 118, a Diesel Particle Filter (DPF) as a second exhaust gas after treatment system component 120 and a mixing chamber as a third exhaust gas after treatment system component 122. The first exhaust gas after treatment system component 118 may also include a DOC in combination with a DPF. The first and second exhaust gas after treatment system component 118, 120 may have a substantially cylindrical shape. In an embodiment they may have at least a mid section 124, seen in a longitudinal direction L, which is similar in shape and dimensions and which fits both the first and second mounting positions 18, 20. In an embodiment each exhaust gas after treatment system component included in the group of particle filter (PF), muffler, heat source for PF regeneration and Selective Catalytic Reductor (SCR) may have a substantially cylindrical mid section 124 that fits at least one of the first and second mounting position 18, 20, such that each of these components may be mounted in at least one of the mounting positions 18, 20. In an embodiment each of the components may be mounted in each of the first and second mounting positions 18, 20. In an embodiment at least one of the exhaust gas after treatment components has a longitudinal axis C and is rotatable within a respective mounting position 18, 20, between different positions angularly around the longitudinal axis C. In an embodiment each of the components has a longitudinal axis C and is rotatable within a respective mounting position 18, 20, between different positions angularly around the longitudinal axis C. In mounted position in an embodiment the longitudinal axis C of an exhaust gas after treatment component may substantially coincide with a longitudinal axis A of the respective mounting position 18, 20, 72.

In an embodiment the components for mounting in the first and second mounting positions 18, 20 may have a groove 128 or notch in peripheral direction around at least part of the outer surface 130 of the component, for cooperation with the or a protrusion 50 on the respective mounting surface 32, 34, for limiting longitudinal movement of the component within the respective mounting position 18, 20. In an embodiment according to fig. 1 the SCR 118 has an outlet 131 near a first end 132 and an inlet 134 near an opposite second end 136. The inlet 132 includes a curved tube 138, bent in the direction of the first end 132. The DPF 120 may have a first end 140 and an opposite second end 142. A bent down tube 144 may be provided near the first end 140, forming an outlet 146 of the DPF, whereas an inlet 148 may be provided in the PDF near the second end 142. Fig. 1 shows a mixing chamber (MC) 122 which has an inlet end 150 and an outlet end 152. In fig. 2 the inlet end 150 of the mixing chamber MC is connected to the outlet 146 of the DPF and the outlet end 152 is connected to the inlet 134 of the SCR. The mid section 124 of each of the DPF and the SCR may be provided between the respective first and second ends thereof and may be positioned against a mounting surface 32, 34 of the respective mounting position 18,20.

In an embodiment the axis A₁, A₂, A₃ of the mounting positions 18, 20, 72 may lie on the corners of a triangle T, shown in fig. 5 in broken lines. In an embodiment the triangle T may have a blunt top T₁, such that it has a relatively small height H and a relatively wide base B, making the assembly 10 relatively low. In another embodiment the triangle T may have a sharp top T₁, such that it has a larger height H and a smaller base B than in the embodiment described before, making the assembly 10 relatively small in overall maximum width B1. The shape of the triangle T may be varied in order to optimize the overall dimensions of an assembly for a specific use.

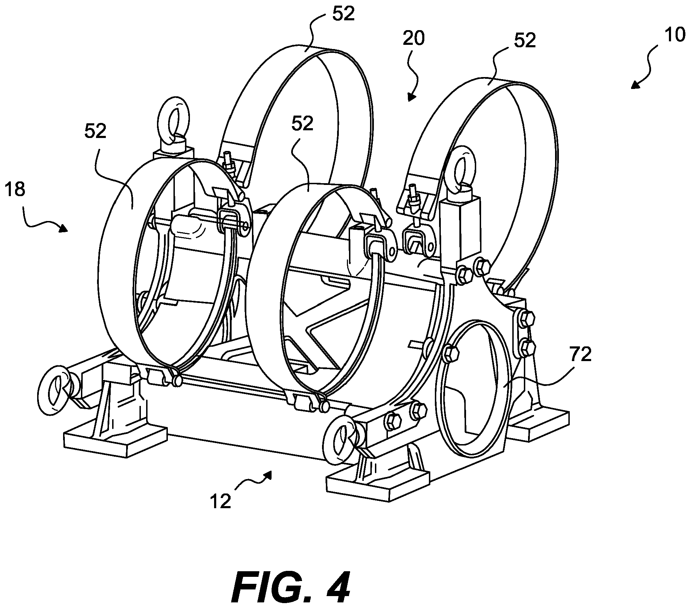

Fig. 3 shows a mount 12 similar to the one as shown in fig. 1. In this embodiment one of the foot elements 30 is positioned below the plane W. In another embodiment more than one of the foot elements 30 may be either below or above the plane W. Fig. 4 shows an alternative embodiment of a mount 12, wherein the mounting bracket 90 is omitted. In this embodiment there may be no electronic components in the assembly or the electronic components may be mounted on a separate device, not shown in the drawings.

Fig. 5 shows a bottom and side view of a mount 12 of fig. 1 - 3 or 4. Like parts have like reference signs throughout the figures. In the embodiment of fig. 5 the foot elements 30 each have an opening 154 for mounting the body 16 to a mounting surface. The exhaust gas after treatment components 118 and 120, in the embodiment shown respectively a PF, which in an embodiment may be combined with a DOC, and a muffler or alternatively a SCR may extend on both ends beyond the brackets 24, 26, such that they may be connected to the ends of a mixing chamber MC at the brackets.

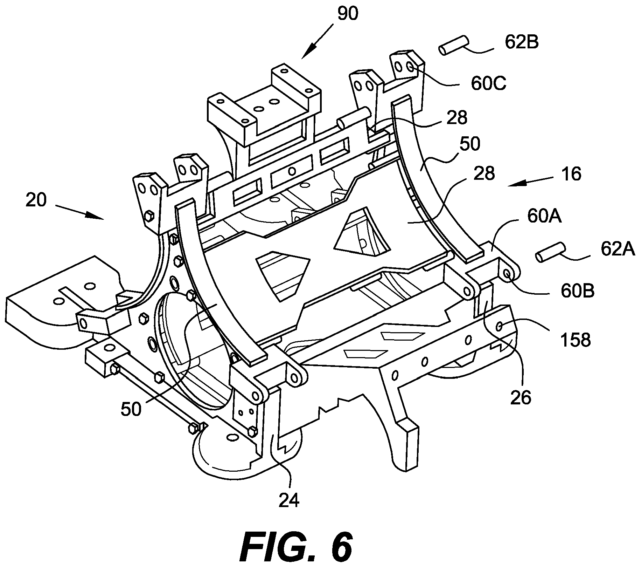

Fig. 6 shows in perspective view an embodiment of a body 16 of a mount 12, in which the same or similar parts are provided with the same or similar reference signs as in the embodiments discussed before. In this embodiment the body 16 may be cast. In an embodiment the body 16 may have cast iron brackets 24, 26, connected by cast iron cross members 28. Cast elements may prevent welding problems, may provide sufficient flexibility, may provide good heat tolerance and may be economical. In another embodiment the body 16 may be a single cast piece. In an embodiment the bracket 90 may be integrated in a cross member 28. It is contemplated that in this embodiment bracket 90 may alternatively or additionally be a stack mount configured to support an exhaust stack (not shown) or another exhaust component of exhaust after treatment assembly 10. In an embodiment one of the cross members 28 may be provided with a mounting surface 158 for mounting a circuit board (not shown) for electronic components, sensors, electric circuitry and other additional components for control of the assembly 10 or parts thereof. In an embodiment such circuit board may be provided with a thermal isolation facing the adjacent mounting position 20, such that any electronic or other component or sensor mounted on the circuit board is shielded from heat coming from exhaust gas after treatment components mounted on the mount 12. In an embodiment of a body 16 according to fig. 6 hinge parts 60A may be provided in which connectors 52 may be mounted by appropriate hinge pins 62A to be inserted through holes 60B in the hinge parts 60A in a direction substantially parallel to a longitudinal direction of the relevant mounting surface 32, 34. In an embodiment similar openings 60C may be provided for mounting a fixing pin 62B through the opposite end of a connector 52, in a similar direction. Such pins 62A may in an embodiment be press fit into the openings 60B, 60C. In another embodiment the pins 62A may be screwed into the openings 60B, C.

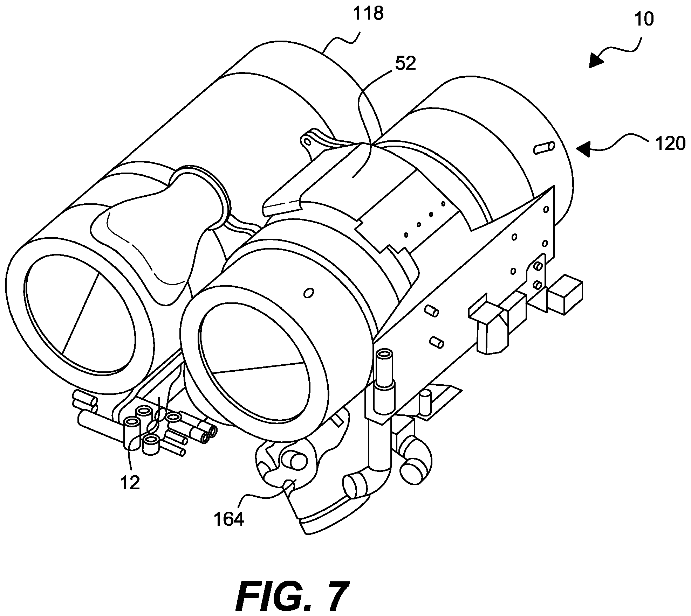

Fig. 7 shows in perspective view an assembly 10, including a mount 12 with a CRT including a PF 120, which in an embodiment may be a DPF, mounted in a second mounting position 20 as a second exhaust gas after treatment component 120. In the first mounting position 18 in an embodiment a muffler may be mounted, as a first exhaust gas after treatment component 120. In another embodiment a SCR such as a NOx reduction component may be mounted in the first mounting position 18, as a first exhaust gas after treatment component 118. A mixing chamber (not shown) may be positioned in a third mounting position 72, fluidly connecting the first and second exhaust gas after treatment components 118, 120. In an embodiment of fig. 7 a connector 52 may be provided extending over part of the outer surface of the first exhaust gas after treatment component 118, fixing the component 118 against the mounting surface 32. The embodiment of Fig. 7 also includes a heat source 164 for PF regeneration. The heat source 164 may include a fuel injector configured to inject fuel into the exhaust gas flow G for increasing the temperature of the exhaust gas flow.

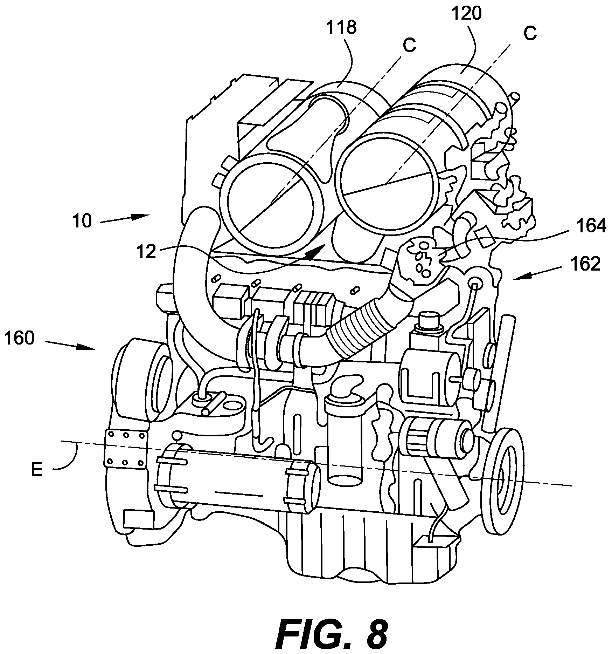

In fig. 8 an assembly 10 is shown, mounted on an engine block 160 by the mount 12. The engine block may be a block for an internal combustion engine, such as but not limited to a diesel engine, gasoline engine, petrol engine, natural gas engine or bio fuel engine. The mount 12 may in an embodiment be mounted by the foot 22 on a top 162 of the engine block 160. In another embodiment the mount 12 may be mounted to a side of the engine block. In still another embodiment the mount 12 may be mounted within a engine compartment, mounted to a frame part such as but not limited to a chassis part of a vehicle, machine or work tool. In still another embodiment the mount 12 may be mounted spaced apart from the engine block and/or engine compartment. In an embodiment the mount 12 may be mounted to a part of a vehicle, machine frame or work tool, for example but not limited to a chassis or drive train of a vehicle or work tool. In an embodiment shown in fig. 8 the mount 12 is mounted such that the longitudinal axis C of both the first and second exhaust gas after treatment components 118, 120 extend substantially perpendicular to a longitudinal axis E of the engine block 160. The axis C may extend substantially horizontally, and may extend substantially next to each other seen in a substantially horizontal direction. In another embodiment the axis C may extend substantially parallel to the longitudinal axis E. In still another embodiment the axis C may extend substantially vertically in a mounting position of the mount 12. In still another embodiment the axis C may extend substantially horizontally and substantially above each other in a mounted position of the mount. In another embodiment the axis C may extend at an angle relative to a horizontal and/or a vertical plane and/or relative to the axis E. In the embodiment of fig. 8 a heat source 164 for PF regeneration may be mounted to the mount 12. In an embodiment the heat source may include a fuel burner that may be mounted on the mount 12. Alternatively the heat source 164 may be an electrical heater.

In yet another embodiment, the mount 12 may be integrally formed of an engine part, for example, the mount 12 may be integrally formed with a valve cover of the engine. In yet another embodiment, the mount 12 may be integrally formed with an engine block of the engine.

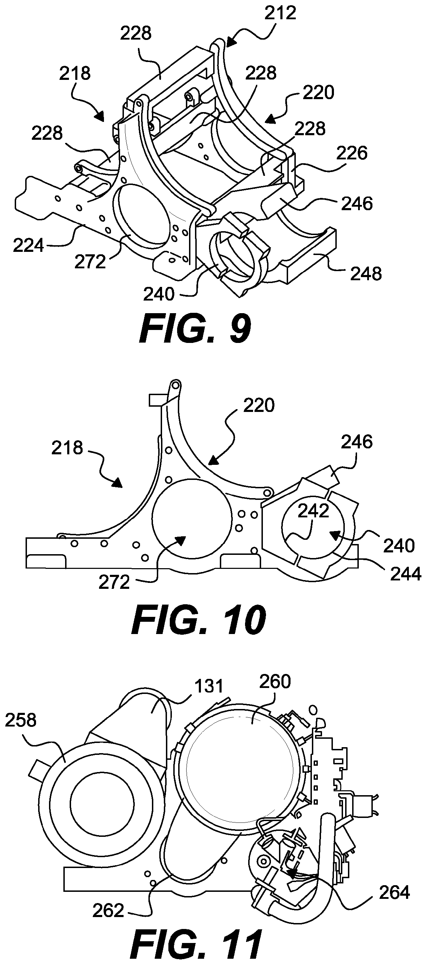

Fig. 9-11 an embodiment of a mount 212 in respectively perspective view, side elevation view and in side elevation view with the exhaust gas treatment components mounted thereon. The embodiment of Figs. 9-11 is similar to the embodiment shown in e.g. Fig. 4 with respect to the configuration and the relative position of the first mounting position 218, the second mounting position 220 and the third mounting position 272. The mount 212 also includes a body having two brackets 224, 226 that are interconnected with at least one cross member 228, in the present embodiment four cross members 28. Additionally, the mount 212 may include a fourth mounting position 240 as shown in Figs 9-11. The fourth mounting position 240 may include a first ring segment 242 that is connected to the mount 212. The first ring segment 242 may be an integral part of the mount 12 or may be a separate part. A second ring segment 244 may be connected to the first ring segment 242, for example by bolts. Together, the ring segments 242 and 244 may define a substantially circular shaped opening that forms the fourth mounting position 240 as is clearly visible in Fig. 10. Fig. 9 also shows heat shields 246, 248. Instead of a second ring segment 242, also a strap, similar to the connector 52, i.e. including a strip or band element 58, may be used. In the embodiment shown in Fig.10, a first exhaust gas treatment component 258, for example, one of a muffler and a SCR, is placed in the first mounting position 218. A second exhaust gas treatment component 260, for example, a PF has been mounted on the second mounting position 220. A third exhaust gas treatment component 262, for example, a connecting pipe or a mixing chamber has been mounted in the third mounting position 272. A fourth exhaust gas treatment component 264 may be mounted in the fourth mounting position 240. The fourth gas treatment component 264 may, for example, be a heat source for PF regeneration. The heat source may include a fuel injector that injects fuel in the hot exhaust gas and that may burn and thus increase the exhaust gas temperature. The higher exhaust gas temperature may promote the PF-regeneration.

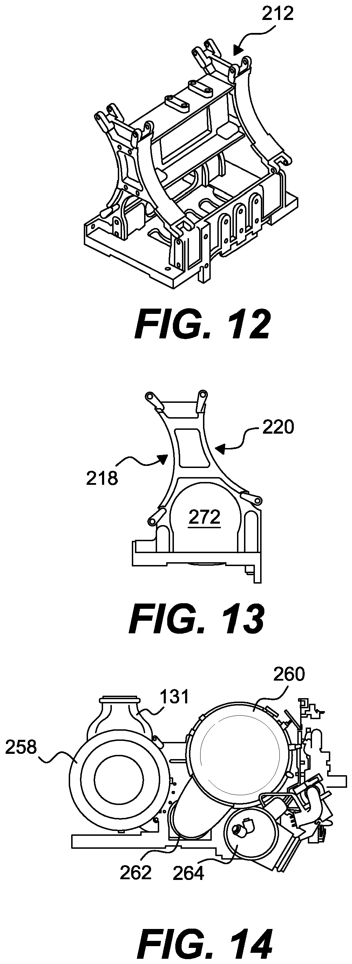

Fig. 12-14 show an alternative embodiment of a mount in respectively perspective view, side elevation view and in side elevation view with the exhaust gas treatment components mounted thereon. In this embodiment like parts have been indicated with the same reference numbers as in Figs. 9-11. The main difference is the relative positions of the various mounting positions 218, 220, 272, 240 and the rotational position and outflow direction of outlet 131 of the second exhaust gas treatment component 258. The central axis of the first mounting position and the second mounting position are a bit more spaced apart.

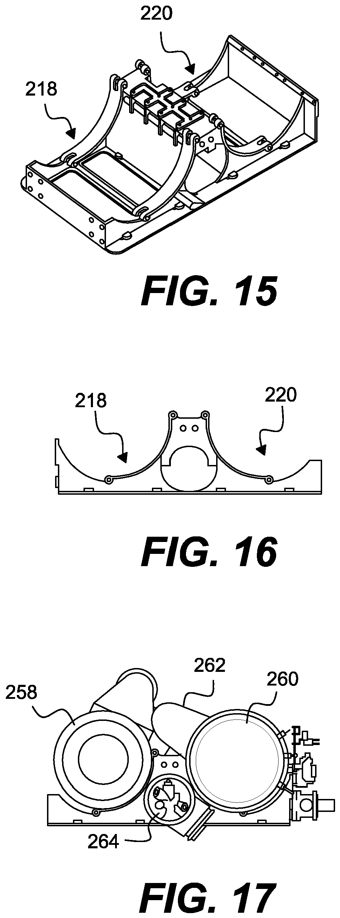

In yet another alternative embodiment of which an example is shown in Figs 15-17 central axis of the first and the second mounting position 218 and 220 are at substantially the same level. This embodiment only includes a first a second and a third mounting positions 218, 220 and 272. As is clear form Fig. 17, the third mounting position 272 may carry a heat source 264 for PF regeneration. The first mounting position 218 may, in an embodiment carry, for example, one of a muffler and a SCR 258. The second mounting position may, in an embodiment, carry, for example a PF 260. In this embodiment the connector pipe or, alternatively, the mixing chamber 262 may not be directly supported by the mount

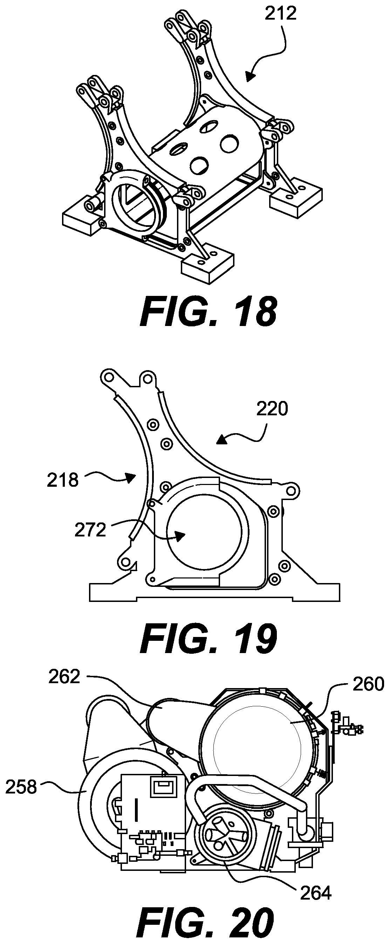

Fig. 18-20 show yet another alternative embodiment of a mount 212 in respectively perspective view, side elevation view and in side elevation view with the exhaust gas treatment components mounted thereon. As is clear from Fig. 20, the third mounting position 272 now carries a heat source 264 for PF regeneration. The connecting pipe or mixing chamber 262 forming the connection between the first exhaust gas treatment component 258 and the second exhaust gas treatment component 260 may or may not be directly supported by the mount 212 of this embodiment.

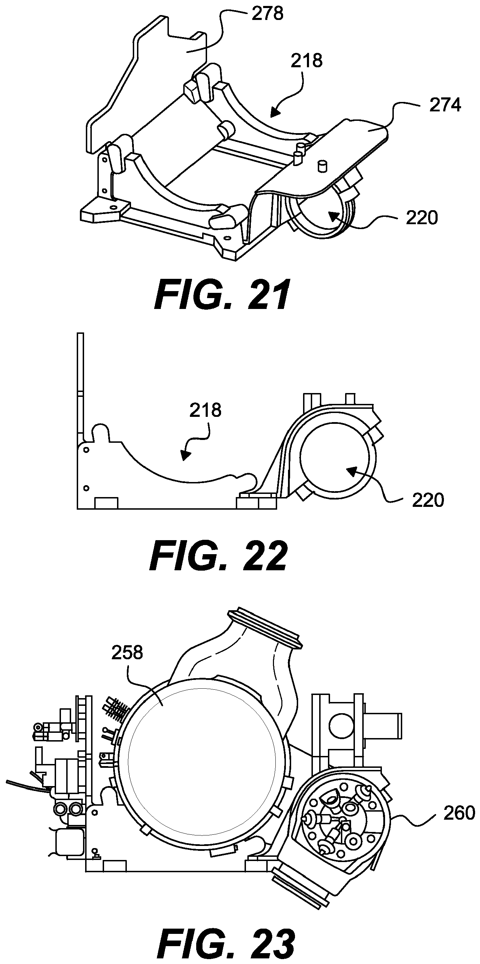

Fig. 21-23 show yet another alternative embodiment of a mount in respectively perspective view, side elevation view and in side elevation view with the exhaust gas treatment components mounted thereon. This embodiment includes a first mounting position 218 in which a first exhaust gas treatment component 258 may be positioned and a second mounting position 220 on which a second gas treatment component 260 may be mounted. In this embodiment, the first gas treatment component 218 may be a PF. The second gas treatment component 260 may be heat source for PF regeneration. The embodiment shown includes a heat shield 274 and a fixture plate 278 on which controller components 280 may be fitted.

Different embodiments and parts thereof as shown in the figures and described here above may be combined into other embodiments. These are also considered to have been disclosed in this description, as well as any equivalents of parts and components thereof.

### Industrial Applicability

A disclosed exhaust gas after treatment assembly may be applicable to any engine where after treatment of exhaust gasses may be useful, possible or important. Such engines may be internal combustion engines, such as but not limited to diesel, gasoline, natural gas, bio fuel or liquefied gas engines. By using an assembly 10 according to the present disclosure such assembly 10 may be optimized for each engine, for example depending on at least one of or a combination of engine type, size, preferred use, available space and other considerations. An assembly 10 according to the present disclosure may in an embodiment be assembled from a mount 12 and several standard, interchangeable exhaust gas after treatment components 14, mountable in and/or on the mount 12. By using a mount 12 according to the present disclosure assembling of an assembly 10 for exhaust gas after treatment may be made easier, whereas the number of parts for designing and assembling such assemblies for different engines may be reduced. The number of different parts that have to be designed, manufactured and stored may be reduced, limiting cost and increasing efficiency.

Based on an engine for which an assembly 10 has to be provided a mount 12 may be chosen. Different components 14 for exhaust gas after treatment may be chosen from a group of such components 14, which group may include different components that may be interchangeable in at least one of the mounting positions 18, 20, 72 of the mount 12. The components 14 may be especially designed as such.

A first one 118 of these components 14, which in an embodiment may be a PF such as but not limited to a DPF, may be mounted in the first mounting position 18 by introducing it through the open side 114 thereof, such that a mid section 124 thereof bears against at least part of the mounting surface 32. The or each connector 52 of the first mounting position 18 may then be moved over the side of the first component 118 facing away from the mounting surface 32 and may be fixed to the mount 12 with the fixing element 68. Thus the component 118 may be fixed in the mounting position 18. In an embodiment the fixing element 68 may be applied relatively loosely at first, allowing at least some rotational movement and/or longitudinal movement of the component 118 within the mounting position 18.

A second one 120 of these components 14, which in an embodiment may be a muffler or an SCR, may be mounted in the second mounting position 20 by introducing it through the open side 116 thereof, such that a mid section 124 thereof bears against at least part of the mounting surface 34. The or each connector 52 of the second mounting position 20 may then be moved over the side of the first component 120 facing away from the mounting surface 34 and may be fixed to the mount 12 with the fixing element 68. Thus the component 120 may be fixed in the mounting position 20. In an embodiment the fixing element 68 may be applied relatively loosely at first, allowing at least some rotational movement and/or longitudinal movement of the component 120 within the mounting position 20.

A third one 122 of the components 14, which may in an embodiment be one of a mixing chamber and a connector pipe 122, may be slid into the third mounting position 72, such that the inlet 150 lies near or in one of the openings 74, 76 and the outlet 152 lies near or within the other of the openings 74, 76.

The first component 118 may be rotated and/or translated within the mounting position 18, relative to the mount 12 and/or to the third component 122, such that a fluid connection may be made between the first and third component 118, 122. The second component 120 may be rotated and/or translated within the mounting position 20, relative to the mount 12 and/or to the third component 122, such that a fluid connection may be made between the first and third component 118, 122. Then the interconnected set of the first, second and third components 118, 120,122 may be properly positioned relative to the mount 12. Then the fixing elements 68 may be tightened or otherwise brought in to a position in which the first and second component 118, 120 are fixed in the respective mounting positions 18, 20, which may be understood as being restrained against movement relative to the mount 12.

Electronic components such as sensors 92 and/or other components 102 may be mounted on a support bracket 90, which may be mounted on the mount 12 prior to or after mounting some or all of the components 14. Lifting elements 80 may be provided on the mount 12 in a position appropriate to lift the assembly 10 to a mounting position. In an embodiment in which the foot 22 has to face downward in a mounting position, lifting eyes 80 may be provided at least at the first side 84 opposite the foot 22. In an embodiment in which the foot 22 has to face sideways in a mounting position, lifting eyes 80 may be provided at least at the second side 86. In another embodiment lifting elements may be provided in different positions. By lifting the assembly 10 by the lifting elements 80 it may be moved to a mounting position, which in an embodiment may be to a position above an engine block 160. Then the assembly 10 may be lowered onto the engine block 160, such that the foot elements 30 are positioned in mounting positions on the engine block 160. Then the mount may be fixed to the engine block 160 with appropriate means, such as for example but not limited to bolds, nuts, screws or the like securing elements. Then appropriate connections may be made between engine block exhaust openings, such as through one or more manifolds, and an exhaust gas outlet system, such as but not limited to a tail pipe, muffler system or other appropriate components. The arrows G in Figs. 2 and 5 indicate an example of the direction of the exhaust gas flow through the exhaust gas treatment assembly.

The mount 12 with the components 14 may in another embodiment be brought to a position next to a frame part of a vehicle, machine or tool, such that it may be mounted in a desired position on said frame. In another embodiment the mount 12 may be mounted in a mounting position such as on an engine block or a frame, as discussed before, before mounting some or all of the components 14.

In an embodiment urea may be introduced into the mixing chamber MC 122 via the inlet 156 for mixing with gas entering into the mixing chamber MC from the PF, for further treatment of the gas mixture within a connected SCR.

In an embodiment different components 14 chosen from a group including at least one of each of PF, muffler, heat source for PF regeneration, SCR and mixing chamber may be designed such that each of these components may be fitted in an above disclosed manner in at least one of the mounting positions 18, 20, 72 and may be interchangeable for another of these components 14 of said group. To this end they may in an embodiment all have at least a mid section 124 designed such as to fit against at least part of a mounting surface 32, 34 of at least one of the first and second mounting positions 18, 20. In an embodiment they may be designed such that they have a longitudinal length such that both ends may extend beyond brackets 24, 26 of the mount, in opposite directions, wherein respective inlets and outlets of the components 14 to be fitted in the first and second mounting positions 18, 20 may be positioned outside the mount 12 and/or body 16. In a further embodiment the first and second components 118, 120 may be rotated over 360 degrees within the mounting positions 18, 20, so that the inlet and outlet thereof may be facing any desired direction.

In an embodiment some or each of the components 14 may be dismounted from the mount 12 individually. In an embodiment the components may be exchanged for a new or serviced component 14 easily and economically. In another embodiment a new component 14 may be designed for replacement of an existing component 14, for example based on new environmental or technical requirements or possibilities, which new component 14 may then be placed in the place of the component 14 to be replaced, without the necessity of redesigning the further parts of the assembly.

Although many embodiments have been discussed in this disclosure, improvements and modifications, including combinations and permutations of parts of the embodiments disclosed may be incorporated without departing from the scope of the following claims.

## Claims

1. A combustion engine exhaust after treatment system mount (12), comprising:
a body (16), including:
a first mounting position (18) having a first mounting surface (32) and a first longitudinal axis (A₁);
a second mounting position (20) having a second mounting surface (34) and a second longitudinal axis (A₂); and
a foot (22) for mounting the body (16) to an engine or wall;
wherein the first longitudinal axis (A₁) is positioned parallel to the second longitudinal axis (A₂); and
wherein each of the first and second mounting surfaces (32, 34) has two opposite ends (54, 56), **characterised in that** near each of the ends (54, 56) a connector (52) is provided for mounting an exhaust gas after treatment system component (14) in the respective mounting position.

2. The combustion engine exhaust after treatment system mount (12) according to claim 1, including a third mounting position (72).

3. The combustion engine exhaust after treatment system mount (12) according to any one of claims 1-2, wherein the first and second mounting positions (18, 20) have an open side (114, 116), such that the open sides (114, 116) of the first and second mounting positions (18, 20) are positioned side by side, at a first side (84) of the body (16).

4. The combustion engine exhaust after treatment system mount (12) according to any one of claims 1-3, wherein an at least partly open space (28A) is provided in at least one of the first or second mounting surface (32, 34).

5. The combustion engine exhaust after treatment system mount (12), according to any one of claims 1-4, wherein a first exhaust gas after treatment component (118) is positioned in the first mounting position (18) and a second exhaust gas after treatment component (120) is positioned in the second mounting position (20).

6. The combustion engine exhaust after treatment system mount (12), according to claim 5, wherein the first and second exhaust gas after treatment components (118, 120) are selected from a group including a particle filter (PF), a muffler, a heat source for PF regeneration, a Selective Catalytic Reductor (SCR), a diesel oxidation catalyst (DOC), a lean NOx trap (LNT) or a mixing chamber.

7. A method for manufacturing a combustion engine exhaust after treatment system, comprising:
manufacturing a mount (12) for the exhaust after treatment system, the mount including a body (16) with a first mounting position (18) and a second mounting position (20);
mounting a particulate filter in one of the first and second mounting position (18, 20);
mounting at least one of a muffler, a heat source for PF regeneration, an SCR, a diesel oxidation catalyst (DOC), a lean NOx trap (LNT), or a mixing chamber in the other of the first and second mounting position (18, 20);
wherein the particulate filter and the one of the muffler, the heat source for PF regeneration, the SCR, the diesel oxidation catalyst (DOC), the lean NOx trap (LNT), or the mixing chamber is manufactured such that it may be placed in the respective first or second mounting position (18, 20) in angularly rotated positions; and
mounting a connector (52) to at least one of a first or second mounting surfaces (32, 34), wherein the connector (52) is configured to secure the particulate filter or the at least one muffler, heat source for PF regeneration, SCR, diesel oxidation catalyst (DOC), lean NOx trap (LNT), or mixing chamber to the at least one of the first or second mounting surface (32, 34).

8. The method according to claim 7, further including the step of manufacturing at least two of the muffler, SCR, or mixing chamber, such that each of them may be mounted in the second mounting position (20).

## Patentansprüche

1. Lagerung (12) für ein Verbrennungsmotor-Abgasnachbehandlungssystem, umfassend:
einen Körper (16), umfassend:
eine erste Montageposition (18) mit einer ersten Montagefläche (32) und einer ersten Längsachse (A₁);
eine zweite Montageposition (20) mit einer zweiten Montagefläche (34) und einer zweiten Längsachse (A₂); und
einem Fuß (22) zur Montage des Körpers (16) an einem Motor oder einer Wand;
wobei die erste Längsachse (A₁) parallel zu der zweiten Längsachse (A₂) positioniert ist; und
wobei jede von der ersten und zweiten Montagefläche (32, 34) zwei gegenüberliegende Enden (54, 56) aufweist,
**dadurch gekennzeichnet, dass** nahe bei jedem der Enden (54, 56) ein Anschluss (52) zur Montage einer Abgasnachbehandlungssystem-Komponente (14) in der jeweiligen Montageposition bereitgestellt ist.

2. Lagerung (12) für ein Verbrennungsmotor-Abgasnachbehandlungssystem nach Anspruch 1, umfassend eine dritte Montageposition (72).

3. Lagerung (12) für ein Verbrennungsmotor-Abgasnachbehandlungssystem nach einem der Ansprüche 1 bis 2, wobei die erste und zweite Montageposition (18, 20) eine offene Seite (114, 116) aufweisen, so dass die offenen Seiten (114, 116) der ersten und zweiten Montageposition (18, 20) Seite an Seite, auf einer ersten Seite (84) des Körpers (16), positioniert sind.

4. Lagerung (12) für ein Verbrennungsmotor-Abgasnachbehandlungssystem nach einem der Ansprüche 1 bis 3, wobei ein mindestens teilweise offener Raum (28A) in mindestens einer von der ersten oder zweiten Montagefläche (32, 34) bereitgestellt ist.

5. Lagerung (12) für ein Verbrennungsmotor-Abgasnachbehandlungssystem nach einem der Ansprüche 1 bis 4, wobei eine erste Abgasnachbehandlungssystem-Komponente (118) in der ersten Montageposition (18) positioniert ist, und eine zweite Abgasnachbehandlungssystem-Komponente (120) in der zweiten Montageposition (20) positioniert ist.

6. Lagerung (12) für ein Verbrennungsmotor-Abgasnachbehandlungssystem nach Anspruch 5, wobei die erste und zweite Abgasnachbehandlungssystem-Komponente (118, 120) aus einer Gruppe ausgewählt sind, die ein Partikelfilter (PF), einen Schalldämpfer, eine Wärmequelle zur PF-Regenerierung, einen selektiven katalytischen Reduktor (SCR), einen Dieseloxidationskatalysator (DOC), eine Mager-NOx-Falle (LNT) oder eine Mischkammer umfasst.

7. Verfahren zur Herstellung eines Motor-Abgasnachbehandlungssystems, umfassend:
Herstellen einer Lagerung (12) für das Abgasnachbehandlungssystem, wobei die Lagerung einen Körper (16) mit einer ersten Montageposition (18) und einer zweiten Montageposition (20) umfasst;
Montieren eines Partikelfilters in einer von der ersten und zweiten Montageposition (18, 20);
Montieren mindestens eines von einem Schalldämpfer, einer Wärmequelle zur PF-Regenerierung, einem SCR, einem Dieseloxidationskatalysator (DOC), einer Mager-NOx-Falle (LNT) oder einer Mischkammer in der anderen von der ersten und zweiten Montageposition (18, 20);
wobei das Partikelfilter und das eine von dem Schalldämpfer, der Wärmequelle zur PF-Regenerierung, dem SCR, dem Dieseloxidationskatalysator (DOC), der Mager-NOx-Falle (LNT) oder der Mischkammer derart hergestellt wird, dass dieses in die jeweilige erste oder zweite Montageposition (18, 20) in winkelmäßig gedrehten Positionen platziert werden kann; und
Montieren eines Anschlusses (52) an mindestens einer von einer ersten oder zweiten Montagefläche (32, 34), wobei der Anschluss (52) ausgelegt ist, das Partikelfilter oder den mindestens einen Schalldämpfer, die Wärmequelle zur PF-Regenerierung, den SCR, den Dieseloxidationskatalysator (DOC), die Mager-NOx-Falle (LNT) oder die Mischkammer an mindestens einer von der ersten oder zweiten Montagefläche (32, 34) zu befestigen.

8. Verfahren nach Anspruch 7, ferner umfassend den Schritt der Herstellung von mindestens zweien von dem Schalldämpfer, dem SCR oder der Mischkammer derart, dass jedes von diesen in der zweiten Montageposition (20) montiert werden kann.

## Revendications

1. Monture de système de post-traitement de gaz d'échappement de moteur à combustion (12), comprenant :
un corps (16), comprenant :
une première position de montage (18) possédant une première surface de montage (32) et un premier axe longitudinal (A₁);
une deuxième position de montage (20) possédant une seconde surface de montage (34) et un second axe longitudinal (A₂); et
une patte (22) pour monter le corps (16) sur un moteur ou une paroi ;
dans laquelle le premier axe longitudinal (A₁) est positionné parallèlement au second axe longitudinal (A₂); et
dans laquelle chacune des première et seconde surfaces de montage (32, 34) présente deux extrémités opposées (54, 56), **caractérisée en ce qu'**à proximité de chacune des extrémités (54, 56) un raccord (52) est fourni pour monter un composant de système de post-traitement de gaz d'échappement (14) dans la position de montage respective.

2. Monture de système de post-traitement de gaz d'échappement de moteur à combustion (12) selon la revendication 1, comprenant une troisième position de montage (72).

3. Monture de système de post-traitement de gaz d'échappement de moteur à combustion (12) selon l'une quelconque des revendications 1 à 2, dans laquelle les première et deuxième positions de montage (18, 20) possèdent un côté ouvert (114, 116), de telle sorte que les côtés ouverts (114, 116) des première et deuxième positions de montage (18, 20) soient positionnés côte à côte, au niveau d'un premier côté (84) du corps (16).

4. Monture de système de post-traitement de gaz d'échappement de moteur à combustion (12) selon l'une quelconque des revendications 1 à 3, dans laquelle au moins un espace partiellement ouvert (28A) est ménagé dans au moins l'une parmi la première ou la seconde surface de montage (32, 34).

5. Monture de système de post-traitement de gaz d'échappement de moteur à combustion (12) selon l'une quelconque des revendications 1 à 4, dans laquelle un premier composant de post-traitement de gaz d'échappement (118) est positionné dans la première position de montage (18) et un second composant de post-traitement de gaz d'échappement (120) est positionné dans la deuxième position de montage (20).

6. Monture de système de post-traitement de gaz d'échappement de moteur à combustion (12) selon la revendication 5, dans laquelle les premier et second composants de post-traitement de gaz d'échappement (118, 120) sont sélectionnés dans un groupe comprenant un filtre à particules (FP), un pot d'échappement, une source de chaleur pour la régénération du FP, un dispositif de réduction catalytique sélective (SCR), un catalyseur d'oxydation diesel (DOC), un piège à NOx (LNT) ou une chambre de mélange.

7. Procédé de fabrication d'un système de post-traitement de gaz d'échappement de moteur à combustion, comprenant :
la fabrication d'une monture (12) pour le système de post-traitement de gaz d'échappement, la monture comprenant un corps (16) avec une première position de montage (18) et une deuxième position de montage (20) ;
le montage d'un filtre à particules dans l'une parmi la première et la deuxième position de montage (18, 20) ;
le montage d'au moins l'un parmi un pot d'échappement, une source de chaleur pour la régénération du FP, un SCR, un catalyseur d'oxydation diesel (DOC), un piège à NOx (LNT), ou une chambre de mélange dans l'autre parmi la première et
la deuxième position de montage (18, 20) ;
dans lequel le filtre à particules et l'un parmi le pot d'échappement, la source de chaleur pour la régénération du FP, le SCR, le catalyseur d'oxydation diesel (DOC),
le piège à NOx (LNT), ou la chambre de mélange est fabriqué de telle sorte qu'il puisse être disposé dans la première ou la deuxième position de montage respective (18, 20) dans des positions pivotées de manière angulaire ; et
le montage d'un raccord (52) sur au moins l'une parmi une première ou une seconde surface de montage (32, 34), dans lequel le raccord (52) est configuré pour fixer le filtre à particules ou l'au moins un pot d'échappement, source de chaleur pour la régénération du FP, SCR, catalyseur d'oxydation diesel (DOC),
piège à NOx (LNT), ou chambre de mélange à l'au moins une parmi la première ou la seconde surface de montage (32, 34).

8. Procédé selon la revendication 7, comprenant en outre l'étape de la fabrication d'au moins deux parmi le pot d'échappement, le SCR ou la chambre de mélange, de telle sorte que chacun d'eux puisse être monté dans la deuxième position de montage (20).
